# EUROPEAN PATENT SPECIFICATION

(11) **EP 3 300 811 B1**
(45) Date of publication and mention of the grant of the patent: **27.01.2021**
(21) Application number: 17194302.0
(22) Date of filing: 02.10.2017
(51) Int. Cl.: B21D 43/00, B21D 43/11, B21D 43/05, B25B 5/00

(54) **TRANSFERPRESS FASTENING DEVICE FOR PNEUMATIC PINCERS TO BE COUPLED AND A STAMPING TRANSFERPRESS**
BEFESTIGUNGSVORRICHTUNG EINER STANZTRANSFERPRESSE FÜR PNEUMATISCHE ZANGEN UND EINE STANZTRANSFERPRESSE
DISPOSITIF DE FIXATION POUR UNE PRESSE DE TRANSFERT DE POINÇON POUR PINCE PNEUMATIQUE ET UNE PRESSE DE TRANSFERT DE POINÇON

(30) Priority: 30.09.2016 ES 201631269
(43) Date of publication of application: 04.04.2018
(73) Proprietor: Sarabia Trilla, Miquel, 08028 Barcelona (ES)
(72) Inventor: Sarabia Trilla, Miquel, 08028 Barcelona (ES)
(74) Representative: Ponti & Partners, S.L.P

(56) References cited:
- ES-A2- 2 527 435
- JP-A- H0 847 861

## Description

The present invention relates to a fastening device for pneumatic pincers to be coupled to the movable bar of a stamping press transfer through at least one holder profile of said device.

### Background of the invention

Currently, fastening devices for pneumatic pincers in stamping presses with a transfer system are of the type that comprise a plurality of holder profiles equipped with a plurality of fastening supports for tubular support elements of the pneumatic pincers, which are distributed over a number of different consecutive stamping dies.

The holder profiles of existing fastening devices comprise longitudinal grooves that may removably couple the plurality of fastening supports for the tubular support elements of the pneumatic pincers. These fastening supports include a first type of support, which is adapted to receive one end of one of said tubular elements, and a second type of support, which is equipped with two semi-open rings designed to simultaneously receive the opposite end of said tubular element and the end of another parallel tubular element that occupies the extreme position. The respective pneumatic pincer is mounted on this last extreme tubular element.

The holder profiles may be removably coupled to the respective bars of the press transfer, which are capable of performing a motion in the forward direction of the plates to be stamped, such that a group of pincers associated with a pair of holder profiles facing the same die is capable of fastening a plate to be stamped, transferring it to the following die, and returning to the respective die whilst it is stamped, and repeating this process with the subsequent plates to be stamped or die-cut. Depending on the type of die or plate to be stamped, the operators choose a certain type of fastening device for pneumatic pincers to be coupled to the transfer bar of the stamping press. Once the stamping has been completed, the fastening devices are uncoupled from the transfer bar and transported to the storehouses.

Handling of the existing fastening devices is difficult for operators, since the weight of the set formed by the holder profile, the fastening supports, the tubular elements, and the pincers themselves is high. On the one hand, this makes handling by the operators difficult and, on the other hand, negatively affects the productivity and reliability of the stamping process. In fact, a high weight of the device directly leads to lower precision and a lower travelling speed of the transfer bar where to the holder profiles with their respective fastening supports for the tubular elements are coupled, thereby reducing the productivity of the press and, consequently, increasing the economic cost of manufacturing the stamped plate

From ES 2 527 435 A2 there is known a transfer stamping press fastening device, as defined in the preamble of claim 1.

### Description of the invention

The objective of the fastening device for pneumatic pincers of the present invention is to resolve the disadvantages posed by existing fastening devices, by providing a lighter, easier-to-handle device that preserves good mechanical resistance and abrasion resistance properties.

In order to achieve this objective, according to a first aspect, the present invention provides a fastening device for pneumatic pincers to be coupled to a stamping press transfer through a holder profile, which comprises a plurality of fastening supports for the tubular support elements of said pincers, said supports being capable of coupling to said holder profile, and each of said fastening supports including a body that is adapted to receive at least one of said tubular elements, and securing means to secure at least one of said tubular elements to the body of said fastening support, and is characterised in that the basic component of the material of the body of each of said fastening supports includes at least one technopolymer.

In the present invention, basic component is understood to be a majority component in the composition of the material of the body of the fastening supports for the tubular elements.

Unlike the devices in the prior art, the fastening device claimed herein has the advantage that the basic component of the material of the body of the fastening supports for the tubular support elements of the pincers is a technopolymer. These supports are preferably obtained by means of injection moulding of a material that comprises at least one technopolymer as the basic component. In this way, the manufacturing cost of the supports is significantly reduced, since it is not necessary to perform machining operations and/or surface treatments on the metallic steel or aluminum supports, as in the case of the devices in the prior art.

Moreover, the technopolymeric material electrically insulates the fastening supports, which is very useful when taking into consideration the working environment of stamping presses. On the other hand, the technopolymeric material is very light, without losing the necessary mechanical resistance to optimally secure the tubular elements that support the pincers. The lower weight directly leads to increased productivity of the press (higher travelling speed and higher precision in the handling of the plates to be stamped).

Thanks to the device claimed herein, the transfer press is not only lighter and more economical, but also easier to design and to assemble, and may be adjusted with higher precision.

In the present invention, technopolymer is understood to mean a polymeric or plastic material endowed with a mechanical resistance, a chemical resistance and a heat resistance that makes it suitable to replace a metal in the application claimed herein. The technopolymer is understood to mean a polymeric material selected from a polyamide PA6, a polyamide PA66, a semi-aromatic polyamide, or polyphthalamide (PPA), and a polyphenylene sulfide (PPS), or a mixture thereof.

Polyamide PA6 and PA66 are understood to mean, respectively, polyamides that are also known as poly(hexane-6-lactam) and poly(hexamethylene adipamide).

Optionally, the technopolymeric material is reinforced with glass fibre, for example, preferably, said material comprises between 30% and 50% by weight of glass fibre. The glass fibre confers greater mechanical resistance to the fastening supports.

Preferably, the fastening device includes a plurality of said tubular support elements of the pincers and, advantageously, these tubular elements are made of Steel or Aluminum. The fastening device comprises a first set of said fastening supports, which are configured so as to be removably coupled to a holder profile of said transfer press, each of said fastening supports including two body portions separated from one another, and both separate body portions defining a mutual tightening surface that is capable of acting as a mechanical stopper when one of said tubular elements is secured between both portions.

This mutual tightening surface acts as a mechanical stopper, which allows for flexing without breakage or permanent deformation of the polymeric material of the fastening support when the tubular support element is secured by means of the corresponding screw elements.

Advantageously, the body of said fastening supports comprises at least one pair of orifices for fitting screw elements designed to secure said tubular support element between both separate body portions. Said tubular element may be secured to the support such that the axis thereof is parallel with respect to the body of the support or, alternatively, it may be secured such that the axis is vertical with respect to the body of the fastening support. Also advantageously, the body of said fastening supports comprises a second pair of orifices for fitting screw elements designed to removably couple said supports to the grooves of the holder profile of the press.

The holder profile may be formed by one or more profile sections, which may be aligned over a transfer bar.

Preferably, the fastening device comprises a second set of fastening supports which include a body that is adapted to act as a joining element between a first tubular support element and a second outermost tubular support element associated with a pincer, the first portion of said body defining a semi-open ring that is designed to receive the first tubular support element, and the second portion of said body defining a semi-open ring that is designed to receive the second outermost tubular support element, and each of said semi-open rings including mutual tightening surfaces that are capable of acting as a mechanical stopper when one of said tubular elements is secured in the interior thereof.

Advantageously, each of said semi-open rings of said body comprises at least one pair of opposite orifices provided for fitting screw elements designed to secure, in an optimal spatial position, the first or the second tubular support element of the pincer inside said rings.

According to one embodiment, said body portions in the shape of semi-open rings are placed adjacent to one another and separated by a reinforcement wall.

According to another embodiment, said body portions in the shape of semi-open rings are rotatably mounted such that they may rotate around a same conical rotation axis, said conical rotation axis being placed in such a way that it goes through the orifices of said rings, and the ends of said conical rotation axis being configured so as to adjust the screw elements designed to secure an optimal spatial position of the tubular elements that support the pincer thereon.

In another embodiment, said body portions in the shape of semi-open rings are placed such that may be substantially aligned with the first tubular support element in a position of use of the device, the body of the support including a straight section for joining said two semi-open rings.

In particular, fastening supports with a straight joining section are very useful when the pincers are intended to fasten large dies and the working space for the pincer is very small. Thanks to the characteristics claimed herein, these supports may be easily obtained by the injection moulding of a material that comprises a technopolymer as the basic component.

Alternatively, the body portions in the shape of semi-open rings are placed such that they may be substantially parallel in a position of use of the device, the body of the support including a diagonal section for joining said two semi-open rings.

Optionally, at least one of said semi-open rings includes a ball joint which is housed in the interior thereof and is configured so as to receive an outermost tubular support element of the pincer. This ball joint makes it possible for the pincer to move with four degrees of freedom, and, jointly with the rest of the structure, provides the pincer with six degrees of freedom in order to adapt the position of said pincer to the requirements of the plate to be stamped.

Preferably, said device comprises a plurality of holder profiles, said plurality of holder profiles being capable of coupling to the movable bar of the press transfer, each holder profile including a central longitudinal open channel that is adapted for the passage of the pneumatic and electrical cables of the pincers, and including at least one pair of longitudinal grooves provided for removably coupling a plurality of said fastening supports of the tubular elements. The holder profile may also include, for example, a plurality of front connection plates of the pneumatic circuit.

This central open channel in the profile allows for the passage of the electrical cables that power the presence sensors of the plate to be stamped, as well as for the passage of the pneumatic cables of the pincers that allow for the inlet and outlet of air through said front connection plates.

Optionally, at least one section of the opening of said channel is covered by a lid that is coupled to the longitudinal grooves of the holder profile.

In the present invention, air always circulates through the pneumatic tubes housed inside the longitudinal open channel of the holder profile; therefore, it is not necessary to drill the outer panel of the channel in order to access the inner air ducts formed inside the holder profile, as in the case of the devices in the prior art.

The pneumatic cable circuit is connected to the pincer in such a way that the air inlet and outlet cables travel concealed inside a tubular support element until they reach the central open channel of the holder profile through the fastening support of the tubular element coupled to the holder profile, without the need to drill said profile.

Advantageously, according to one embodiment, the holder profile comprises a pair of lids placed on the opposite outermost ends, at least one of said lids including an opening designed to connect all the electrical cables placed in the central open channel with an external power supply cable. However, according to another embodiment, the holder profile comprises a connector for an external power supply that is joined to a front plate made of a polymeric material, said plate comprising coupling means to be removably coupled to the longitudinal grooves of the holder profile. In this way, users may place the electrical connector at any point in the front part of the holder profile, said electrical connector being protected against impacts.

Preferably, the device includes a carry handle that includes two supports made of a polymeric material which are provided with coupling means to be removably coupled to the holder profile, each of said supports including an orifice through which an input or output terminal of the pneumatic circuit is connected.

According to a second aspect, the present invention provides a transfer stamping press that includes at least one fastening device for pneumatic pincers to be removably coupled to the movable bar of the transfer of said press.

### Brief description of the figures

In order to contribute to a better understanding of what has been explained above, a set of drawings is attached which schematically, and solely for illustrative, non-limiting purposes, represent an embodiment of the invention. Figures 1, 2, 3a and 3b refer to a fastening device in the prior art.
Figure 1 shows a perspective view of a fastening device for pneumatic pincers in the prior art, which includes a holder profile and two fastening supports for tubular support elements associated with one of said pneumatic pincers.
Figure 2 shows a cross-section of a holder profile of the fastening device in the prior art of Figure 1.
Figures 3a and 3b show perspective views of two fastening supports for two tubular support elements of the fastening device in the prior art of Figure 1.
Figure 4 shows a perspective view of a fastening device for pneumatic pincers of the present invention, which includes a holder profile and two pairs of fastening supports and their respective tubular support elements associated with their respective pneumatic pincers.
Figure 5 shows a cross-section of the holder profile of the fastening device of Figure 4.
Figure 6 shows a perspective view of a holder profile of the fastening device claimed herein, which includes two front connection plates of the pneumatic circuit and a lid for the end of the profile that is adapted to connect all the electrical cables to an external power supply cable.
Figure 7a shows a perspective view of a holder profile and a fastening support for a tubular support element of a pneumatic pincer that is vertically coupled to a holder profile. Figure 7b shows a top view of the fastening support of Figure 7a, which includes two body portions separated from one another and adapted to receive the tubular support element of the pneumatic pincer, and screw elements designed to secure the tube between both body portions.
Figure 8a shows a perspective view of a holder profile and a fastening support for a tubular support element of a pneumatic pincer that is horizontally coupled to a holder profile. Figure 8b shows a top view of the fastening support of Figure 8a, which includes two body portions separated from one another and adapted to receive the tubular support element of the pneumatic pincer, and screw elements designed to secure the tube between both body portions.
Figure 9a shows a perspective view of a holder profile and a support of the fastening device claimed herein, which includes a body provided with two semi-open rings designed to receive the respective tubular support elements associated with a pneumatic pincer. Figure 9b shows a profile view of the fastening support of Figure 9a without said tubular elements. Figure 9c shows a profile view of the fastening support of Figure 9a, which includes a ball joint inside one of the semi-open rings.
Figure 10a shows a perspective view of a holder profile and a support of the fastening device claimed herein, which includes a body provided with two semi-open rings that are separated by a diagonal joining section for said rings. Figure 10b shows a profile view of the fastening support of Figure 10a without the tubular support elements associated with the pneumatic pincer.
Figure 11a shows a perspective view of a holder profile and a support of the fastening device claimed herein, which includes a body provided with two semi-open rings that are mounted such that they rotate around the same rotation axis and are adapted to receive the respective tubular support elements associated with a pneumatic pincer. One of said rings includes a ball joint in the interior thereof. Figures 11b and 11c show, respectively, a profile and a top view of the support of Figure 11a without said tubular support elements.
Figure 12 shows a perspective view of a holder profile and two supports of the fastening device. One of the supports includes a body provided with two semi-open rings that are separated by a straight joining section for said rings.
Figure 13 shows a view from above of the holder profile and the supports of Figure 12.
Figure 14 shows a perspective view of a section of a holder profile whereto a carry handle and a plate equipped with an electrical connector for an external power supply cable have been removably coupled. The carry handle includes two supports made of a polymeric material and equipped with openings through which the input and output terminals of the pneumatic circuit are coupled.

### Description of a preferred embodiment

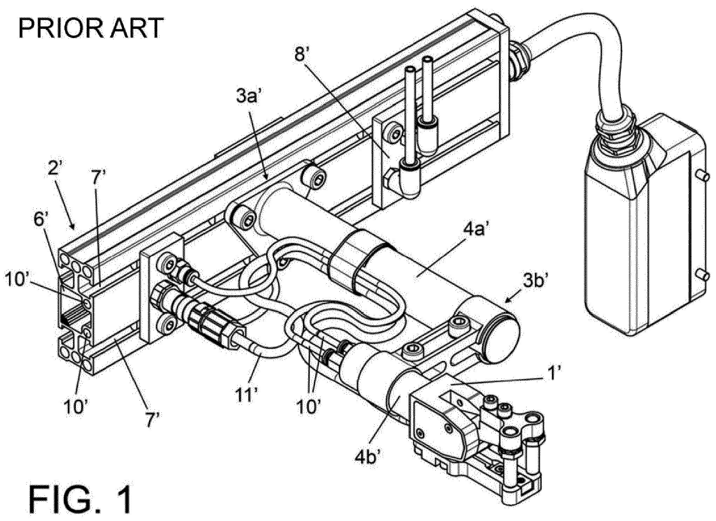

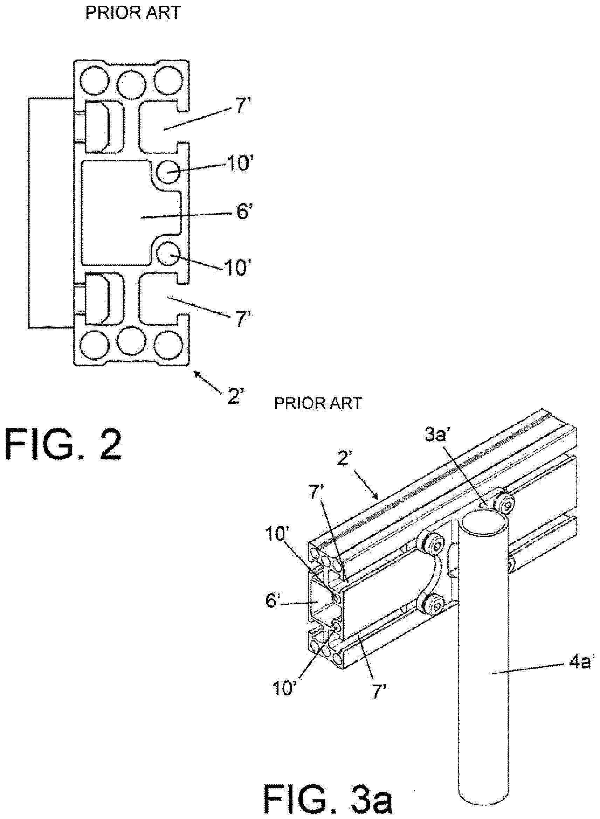

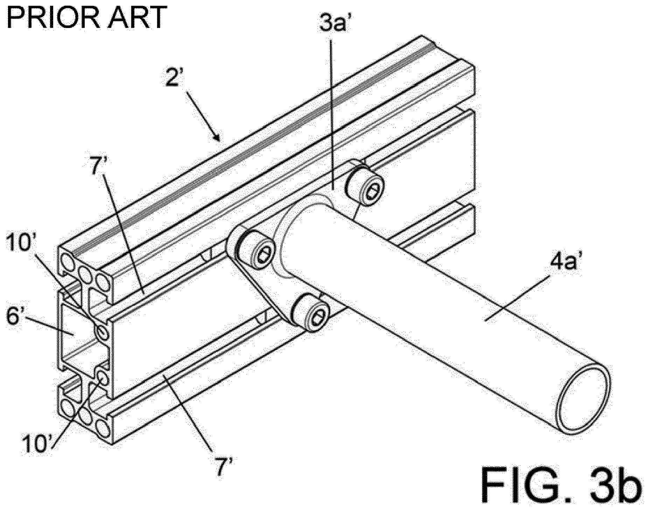

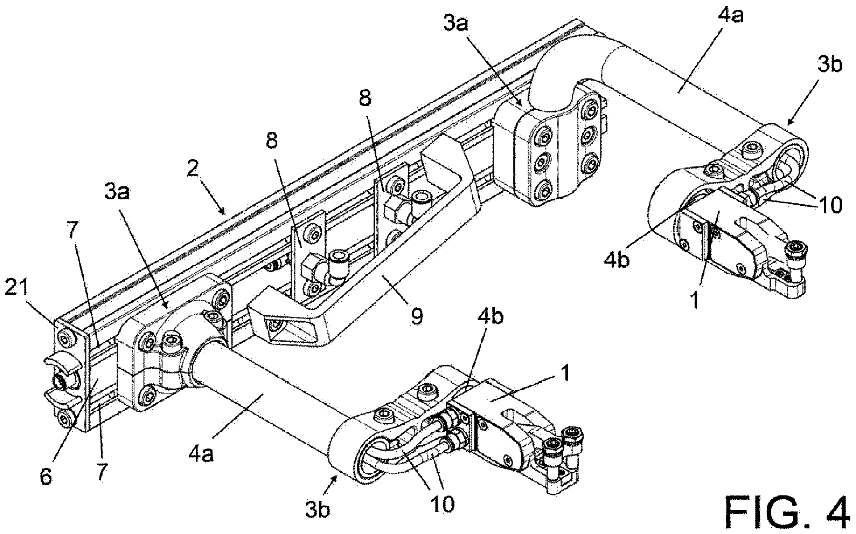

Below it is described a preferred embodiment of the fastening device claimed herein, by referring to Figures 4 to 14 described above. Figures 1, 2, 3a and 3b refer to a fastening device in the prior art.

The fastening device for the pneumatic pincers 1 of the present invention is of the type that comprises a holder profile 2 to be coupled to the movable bar of the transfer (not represented) of a transfer stamping press and a plurality of fastening supports 3a, 3b, 3c for tubular support elements 4a, 4b of said pneumatic pincers 1, which may be coupled to said holder profile 2. Each of the fastening supports 3a, 3b, 3c includes a body that is adapted to receive one or more of said tubular support elements 4a, 4b, and screw elements 15a that are designed to secure at least one of said tubular support elements 4a, 4b to the body of said supports 3a, 3b, 3c.

Unlike the devices in the prior art, the fastening device claimed herein has the advantage that the material of the body of the fastening supports 3a, 3b, 3c for the tubular elements 4a, 4b that support the pincers 1 has a technopolymer as the basic component. In particular, according to the preferred embodiment being described, the aforementioned fastening supports 3a, 3b, 3c are obtained by means of injection moulding of a material that includes said technopolymer as the basic component.

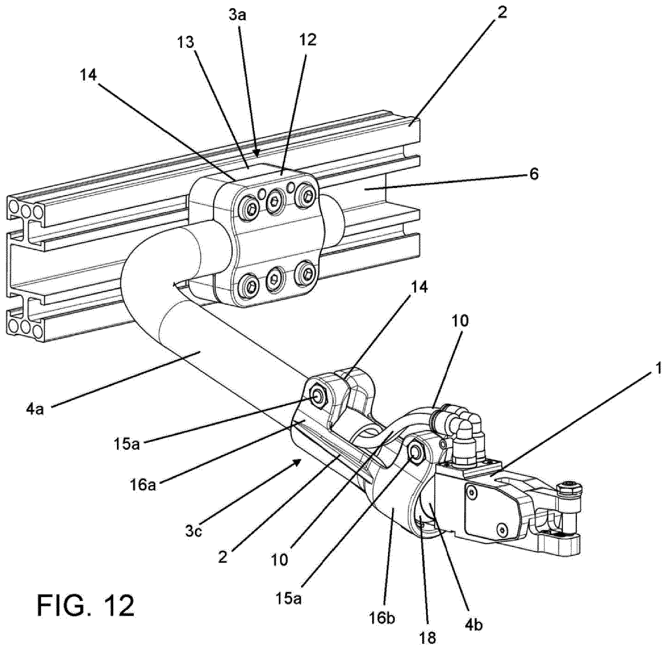

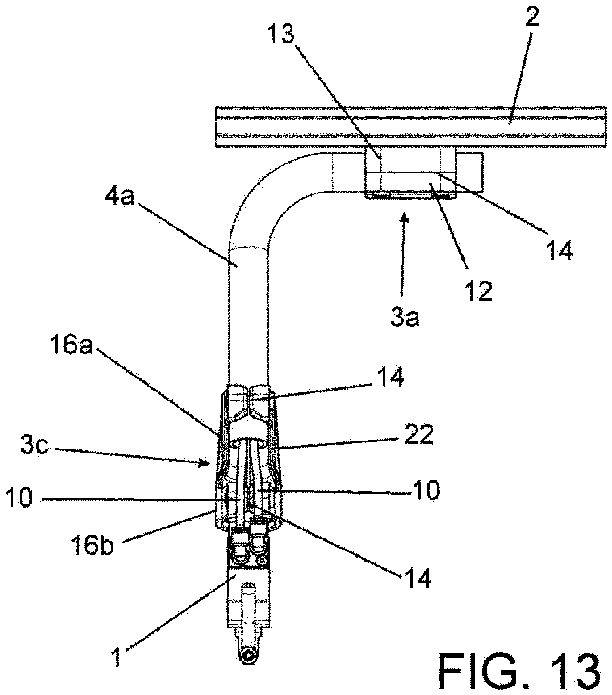

As discussed in the description of the invention, the technopolymeric material of the body of the fastening supports 3a, 3b, 3c must be a technopolymeric material that, whilst being light, provides the body of said supports 3a, 3b, 3c with a mechanical resistance, a chemical resistance and a heat resistance that are suitable to replace the metal in the application claimed herein, associated with a transfer stamping press. In the embodiment being described, the fastening supports 3a, 3b, 3c have been obtained by means of injection moulding of a technopolymer that includes a polyamide PA66 reinforced with 50% of glass fibre. The density of this material has the advantage that it is much lower than the density of Aluminum (1.3 kg/dm³ for polyamide PA66 vs 2.7 kg/dm³ for Aluminum and 7.8 kg/dm³ for Steel), which is the material with which the fastening supports 3' of the devices in the prior art are usually manufactured. Moreover, the fastening supports 3a, 3b, 3c of the device claimed herein have the advantage that, since they are obtained by moulding, the machining operations and surface treatments required by the Steel or Aluminum supports 3' in the prior art are not necessary, and it is also not necessary to explore other forms for the fastening supports 3a, 3b, 3c intended to reduce the space occupied by the device and facilitate the location of the pincers 1 of the press. The support 3c shown in Figures 12 and 13 is an example of an embodiment of a support that makes it possible to operate the pincers 1 in very small spaces

Figure 4 shows an embodiment of the fastening device, which includes:
- a holder profile 2 to be coupled to the movable bar of the transfer (not represented) of a stamping press, which includes a longitudinal open channel 6 that is adapted for the passage of the pneumatic cables 10 and the electrical cables 11 of the pincers 1, longitudinal grooves 7 provided for removably coupling the plurality of fastening supports 3a, 3b of the tubular support elements 4a, 4b of the pincers 1, and outermost lids 21 provided with orifices that make it possible to connect the electrical cables 11 of two adjacent holder profiles 2;
- a first set of fastening supports 3a made of a technopolymeric material, each of which includes a body configured so as to be removably coupled to said holder profile 2, and is adapted to receive a first tubular support element 4a in the interior thereof;
- a second set of fastening supports 3b made of a technopolymeric material, each of which includes a body that is adapted to simultaneously receive, in parallel, a first tubular support element 4a and a second outermost tubular element 4b associated with the same pneumatic pincer 1;
- front connection plates 8 for the input and output terminals of the pneumatic circuit; and
- a handle 9 designed such that an operator may carry the fastening device during the transport thereof until it reaches the storehouse or during placing on the movable bar of the stamping press transfer.

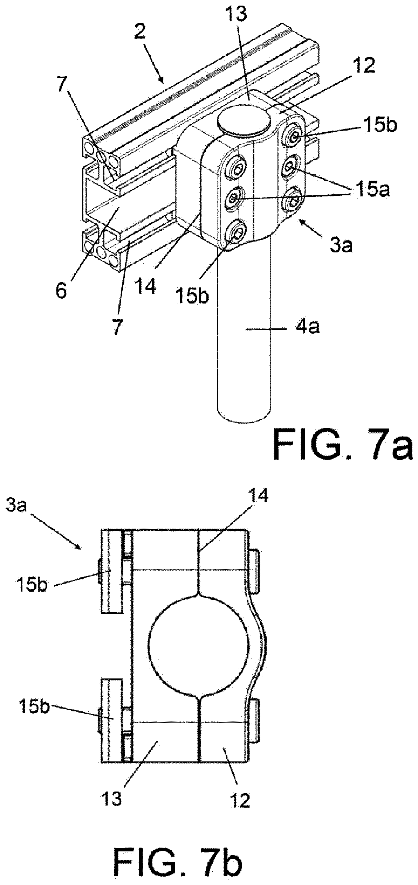

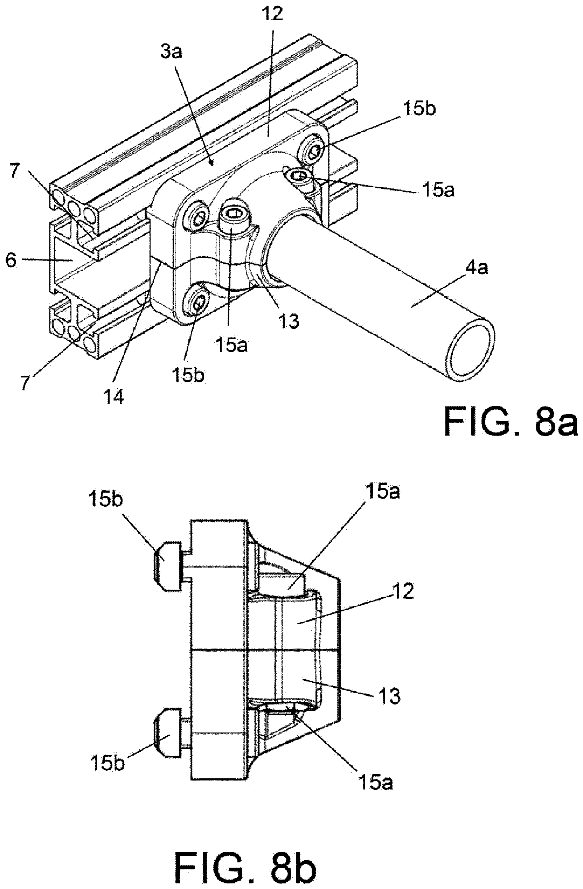

The body of the first set of fastening supports 3a of the device claimed herein includes two body portions 12, 13 separated from one another in such a way that they define a mutual tightening surface 14 for tightening by means of screw elements 15a that fit into the orifices of the body of the support 3a. This surface 14 acts as a mechanical stopper during tightening in order to prevent breakages or deformations in the technopolymeric material. The tubular support element 4a may be secured between the two body portions 12 and 13, such that the axis thereof is parallel with respect to the body of the support 3a (see Figures 7a, 7b) or, alternatively, may be secured such that the axis is vertical with respect to the body of the support 3a (see Figures 8a, 8b). In any case, the body of said supports 3a is configured so as to be directly coupled into the longitudinal grooves 7 of said holder profile 2 by means of the fastening elements 15b.

The body of the second set of fastening supports 3b, 3c of the device claimed herein includes a pair of semi-open rings 16a, 16b that are adapted to simultaneously, and respectively, receive the first tubular element 4a and the second outermost tubular element 4b associated with a pneumatic pincer 1. Each of said open rings 16a, 16b defines mutual tightening surfaces 14 for tightening by means of screw elements 15a that fit into the openings of said rings 16a, 16b. Optionally, one of said rings 16b may house a ball joint 18 in the interior thereof, which is configured to receive the outermost tubular support element 4b of the pincer 1.

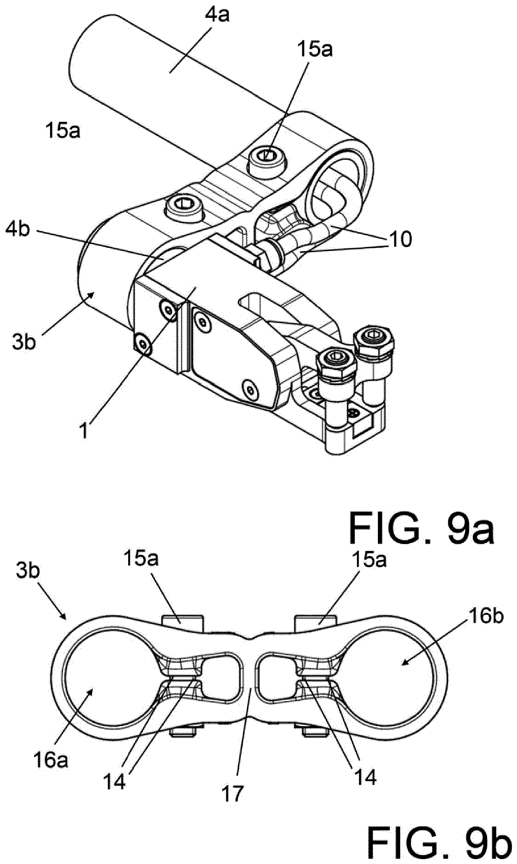

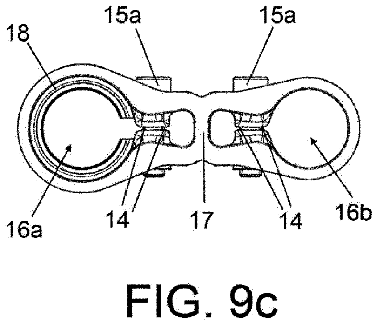

Figures 9a, 9b and 9c show a first embodiment of the second set of fastening supports 3b, wherein the rings 16a, 16b of the support body 3b are placed adjacent to one another and separated by a reinforcement wall 17.

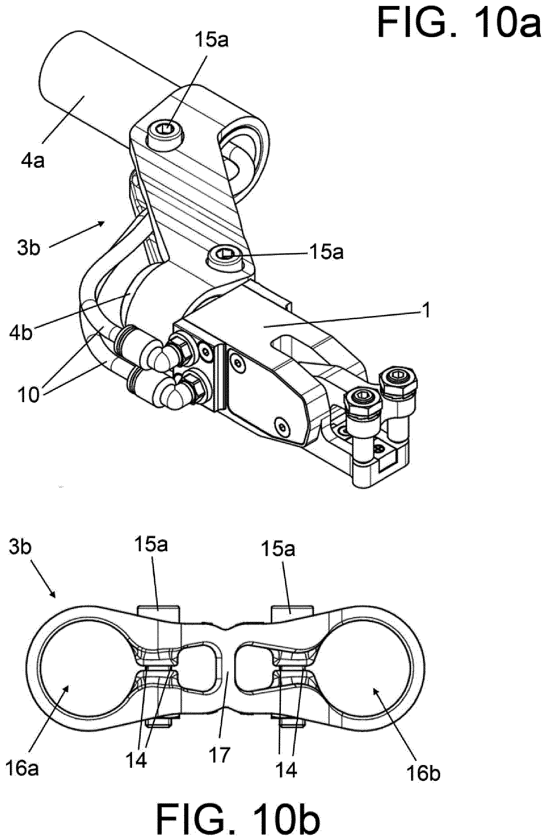

Figures 10a and 10b show a second embodiment of the second set of fastening supports 3b, wherein the support body 3b defines a diagonal joining section between the rings 16a, 16b. This section is designed to facilitate the positioning of the pincer 1 inside the press transfer.

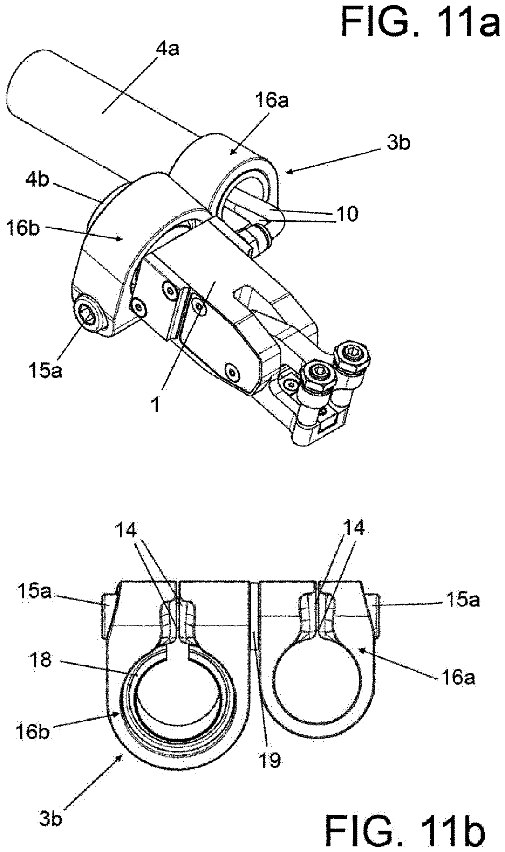

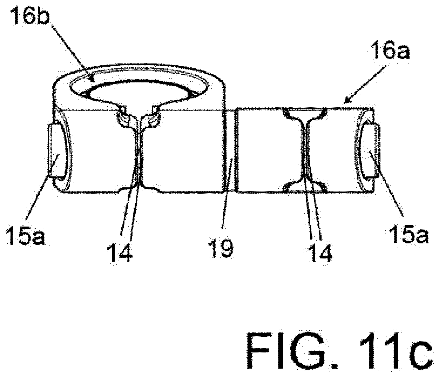

Figures 11a, 11b and 11c show a third, additional embodiment of the second set of fastening supports 3b, wherein the rings 16a, 16b are rotatably mounted in such a way that they may rotate around a same conical rotation axis 19. The ends of said conical rotation axis 19 are configured such that they may adjust the screw elements 15a designed for the tightening of the respective tubular elements 4a, 4b inside said rings 16, 16b.

Figures 12 and 13 show a fourth embodiment of the second set of supports 3c, wherein the support body 3c defines a straight joining section 22 between the semi-open rings 16a, 16b. This straight section 22 is designed to facilitate the positioning of the pincer 1 inside the press transfer in particularly small spaces.

The fastening support 3b with the ball joint 18 of Figures 11a, 11b, 11c allows for six degrees of freedom, i.e. three movements, three rotations and the orientation thereof, which are necessary in order to place the pincer 1 at any point in space. This is particularly useful given the complexity of the plate to be handled inside the transfer bar of the press in a stamping process.

As discussed in the description of the invention, the holder profile 2 of the fastening device claimed herein is provided with a longitudinal open channel 6 that is adapted for the passage of the electrical cables 11 that power the presence sensors of the plate to be stamped, as well as for the passage of the air inlet and air outlet pneumatic cables 10 of the pincer 1.

In the devices in the prior art, circulation of air in the pneumatic circuit takes place through inner channels 10' inside the same holder profile 2', following transverse drilling of said inner channels 10' through the front connecting plates 8'. On the contrary, in the fastening device claimed herein, circulation of air in the pneumatic circuit takes place, at all times, through the air inlet and outlet cables 10, which, jointly with the electrical cables 11, travel inside the tubular element 4a until they reach the longitudinal open channel 6, through the body of the fastening support 3a for said tubular element 4a. Thanks to this, the device claimed herein is very easy to handle, since the cables are kept inside the tubular elements 4a and the holder profile 2.

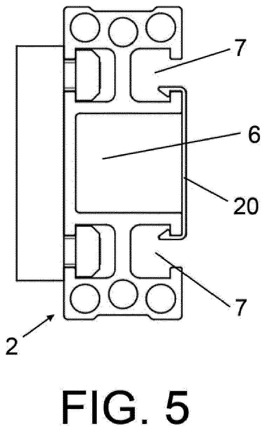

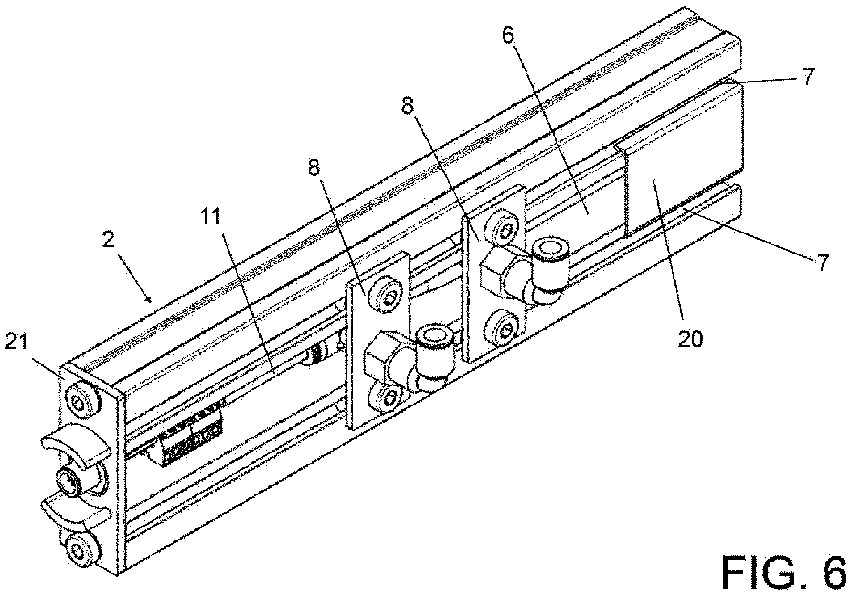

Figures 5 and 6 show a cross-section and a perspective view of a section of a holder profile 2 of the device claimed herein, which shows the longitudinal open channel 6 and the two front connection plates 8 for the input and output cables 10 of the pneumatic circuit, which are housed inside said longitudinal open channel 6. These same figures show the lid 21 that covers the end of the holder profile 2, which is adapted to connect all the electrical cables 11 to an external power supply cable, as well as the lid 20, which is coupled to some sections of the open channel 6 through the longitudinal grooves 7 of the holder profile 2, in order to protect against the entrance of dust into said longitudinal open channel 6 of the same holder profile 2.

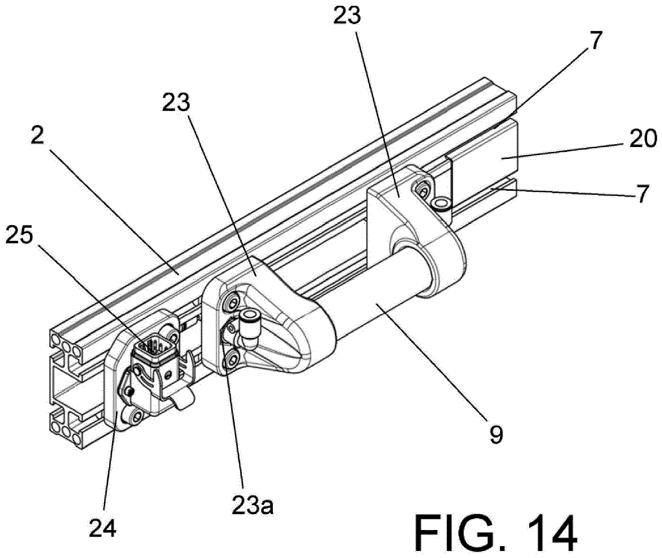

Figure 14 shows a perspective view of a section of a holder profile 2, whereto a carry handle 9 and a plate 24 provided with an electrical connector 25 for an external power supply cable have been removably coupled. The carry handle 9 includes two supports 23 made of a polymeric material, which are equipped with respective orifices 23a through which the input and output terminals of the pneumatic circuit are coupled. In this embodiment, the user may place the electrical connector 25 at any point in the front part of the holder profile 2, in order to ensure that it is protected against impacts.

As discussed in the description of the invention, the fastening device claimed herein has the advantage, with respect to the devices in the prior art, that it is light and easy to handle; for this reason, it significantly improves the productivity and the reliability of the stamping process.

Although we have referred to a specific embodiment of the invention, it is evident to persons skilled in the art that the device described may be subjected to numerous changes and modifications, and that all the details mentioned may be replaced by other technically equivalent ones, without going beyond the scope of protection defined by the attached claims. For example, although certain configurations of the fastening supports 3a, 3b, 3c for the tubular elements 4a, 4b made of a technopolymeric material have been represented and described, these configurations may vary depending on the orientation intended for the tubular support element and the spatial positioning required by the corresponding pincer. Similarly, although the embodiment described has referred to a support device for a pneumatic pincer 1, the same device 1 may be suitable to fasten a non-pneumatic type of pincer that may be equally used to fasten plates that are to be stamped in a press.

## Claims

1. Transfer stamping press fastening device for pneumatic pincers (1) to be coupled to a stamping press transfer through at least one holder profile (2) comprising a plurality of fastening supports (3a, 3b, 3c) for tubular support elements (4a, 4b) of said pincers (1), said fastening supports (3a, 3b, 3c) being capable of coupling to one of said holder profiles (2), and each of said fastening supports (3a, 3b, 3c) including a body that is adapted to receive at least one of said tubular elements (4a, 4b) and securing means (15a, 15b) to secure at least one of said tubular elements (4a, 4b) to the body of said fastening support (3a, 3b, 3c), **characterised in that**;
- a first set of said fastening supports (3a) is configured so as to be removably coupled to the holder profile (2) of said transfer press, each of said fastening supports (3a) including two body portions (12, 13), **wherein** the material of the body of said fastening supports (3a) comprises as the basic component, a technopolymer selected from a polyamide PA6, a polyamide PA66, a semi-aromatic polyamide, or polyphthalamide (PPA), and a polyphenylene sulfide (PPS), or a mixture thereof, **and wherein** both body portions (12, 13) define a mutual tightening surface (14) configured to act as a mechanical stopper when a first tubular element (4a) is secured between both portions (12, 13), and **in that**;
- a second set of said fastening supports (3b, 3c) each includes a body that is adapted to act as a joining element between said first tubular support element (4a) and a second outermost support tubular element (4b) associated with the same pincer (1), the first portion of said body defining a semi-open ring (16a) that is designed to receive the first tubular support element (4a) and the second portion of said body defining another semi-open ring (16b) that is designed to receive the second outermost tubular support element (4b), **wherein** the material of the body of said fastening supports (3b, 3c) comprises as the basic component, a technopolymer selected from a polyamide PA6, a polyamide PA66, a semi-aromatic polyamide, or polyphthalamide (PPA), and a polyphenylene sulfide (PPS), or a mixture thereof, **and wherein** each of said semi-open rings (16a, 16b) include mutual tightening surfaces (14) configured to act as a mechanical stopper when one of said tubular elements (4a, 4b) is secured in the interior thereof.

2. Transfer stamping press fastening device according to claim 1, wherein the material of the body of said plurality of fastening supports (3a, 3b, 3c) comprises at least one of those technopolymers reinforced with glass fibre.

3. Transfer stamping press fastening device according to any of claims 1 to 2, wherein the body of said plurality of fastening supports (3a, 3b, 3c) is obtained by means of injection moulding of a material that comprises at least one of those technopolymers as the basic component.

4. Transfer stamping press fastening device according to claim 1, wherein the body of said first set of fastening supports (3a) comprises at least one pair of orifices provided for fitting screw elements (15a) designed to secure said first tubular support element (4a) between both body portions (12, 13).

5. Transfer stamping press fastening device according to any of claims 1 or 4, wherein the body of said fastening supports (3a) comprises one pair of orifices provided for fitting screw elements (15b) designed to removably couple said fastening supports (3a) to the grooves (7) in the holder profile (2) of the press.

6. Transfer stamping press fastening device according to claim 1, wherein each of said semi-open rings (16a, 16b) of said body comprises at least one pair of orifices provided for fitting screw elements (15a) designed to secure the respective first and second tubular support elements (4a, 4b) of the pincer (1) inside said rings (16a, 16b).

7. Transfer stamping press fastening device according to claim 6, wherein said body portions in the shape of a semi-open ring (16a, 16b) are rotatably mounted such that they may rotate around a same conical rotation axis (19), which is placed in such a way that it goes through the orifices of said rings (16a, 16b), the ends of said conical rotation axis (19) being configured so as to adjust the screw elements (15a) thereon in order to secure the positioning of one of said semi-open rings (16a, 16b) on said conical rotation axis (19).

8. Transfer stamping press fastening device according to any of claims 1 to 7, wherein at least one of said semi-open rings (16a, 16b) includes a ball joint (18) that is housed in the interior thereof and is configured so as to receive said second tubular element (4b).

9. Transfer stamping press fastening device according to any of claims 1 to 6, wherein the body of some of the fastening supports (3c) of said second set of supports defines a first semi-open ring (16a) that is designed to receive the first tubular support element (4a), and a second semi-open ring (16b) that is designed to receive the second outermost tubular element (4b), said two semi-open rings (16a, 16b) being arranged such that they may be substantially aligned with the first tubular support element (4a) in a position of use of the device, the body of said fastening supports (3c) including a straight joining section (22) of said two semi-open rings (16a, 16b).

10. Transfer stamping press fastening device according to any of the preceding claims, comprising a plurality of holder profiles (2), said plurality of holder profiles (2) being capable of coupling to the movable bar of the stamping press transfer, and each holder profile (2) including a longitudinal open channel (6) that is adapted for the passage of the pneumatic (10) and the electrical cables (11) and at least one pair of longitudinal grooves (7) provided for removably coupling a plurality of said fastening supports (3a, 3b, 3c) of the tubular elements (4a, 4b).

11. Transfer stamping press fastening device according to claim 10, comprising a lid (20) that is designed to cover at least one section of the outer opening of said longitudinal channel (6) of the holder profile (2).

12. Transfer stamping press comprising at least one fastening device according to any of claims 1 to 11, to be coupled to the movable bar of the transfer of said press.

## Patentansprüche

1. Befestigungsvorrichtung einer Transferstanzpresse für Druckluftzangen (1), die durch mindestens ein Halterprofil (2), das mehrere Befestigungsstützen (3a, 3b, 3c) für rohrförmige Stützelemente (4a, 4b) der Zangen (1) umfasst, mit einem Stanzpressentransfer gekoppelt werden, wobei die Befestigungsstützen (3a, 3b, 3c) an eines der Halterprofile (2) gekoppelt werden können und jede der Befestigungsstützen (3a, 3b, 3c) einen Körper enthält, der dafür ausgelegt ist, mindestens eines der rohrförmigen Elemente (4a, 4b) und Sicherungsmittel (15a, 15b) aufzunehmen, um mindestens eines der rohrförmigen Elemente (4a, 4b) an dem Körper der Befestigungsstütze (3a, 3b, 3c) zu sichern, **dadurch gekennzeichnet, dass**:
- ein erster Satz von Befestigungsstützen (3a) konfiguriert ist, entfernbar an das Halterprofil (2) der Transferpresse gekoppelt zu sein, wobei jede der Befestigungsstützen (3a) zwei Körperabschnitte (12, 13) umfasst, wobei das Material des Körpers der Befestigungsstützen (3a) als die grundlegende Komponente ein Technopolymer enthält, das aus Polyamid PA6, Polyamid PA66, einem halbaromatischen Polyamid oder Polyphthalamid (PPA), und einem Polyphenylensulfid (PPS), oder einer Mischung davon gewählt ist, und wobei beide Körperabschnitte (12, 13) eine wechselseitige Spannfläche (14) definieren, die konfiguriert ist, als ein mechanischer Anschlag zu wirken, wenn ein erstes rohrförmiges Element (4a) zwischen beiden Abschnitten (12, 13) gesichert wird, und dadurch, dass:
- ein zweiter Satz von Befestigungsstützen (3b, 3c) jeweils einen Körper umfasst, der dafür ausgelegt ist, als ein Verbindungselement zwischen dem ersten rohrförmigen Stützelement (4a) und einem zweiten äußersten rohrförmigen Stützelement (4b), das derselben Zange (1) zugeordnet ist, zu wirken, wobei der erste Abschnitt des Körpers einen halboffenen Ring (16a) definiert, der entworfen ist, um das erste rohrförmige Stützelement (4a) aufzunehmen, und der zweite Abschnitt des Körpers einen weiteren halboffenen Ring (16b) definiert, der entworfen ist, um das zweite äußerste rohrförmige Stützelement (4b) aufzunehmen, wobei das Material des Körpers der Befestigungsstützen (3b, 3c) als die grundlegende Komponente ein Technopolymer enthält, das aus Polyamid PA6, Polyamid PA66, einem halbaromatischen Polyamid oder Polyphthalamid (PPA), und einem Polyphenylensulfid (PPS), oder einer Mischung davon gewählt ist, und wobei jeder der halboffenen Ringe (16a, 16b) wechselseitige Spannflächen (14) umfasst, die konfiguriert sind, als ein mechanischer Anschlag zu wirken, wenn eines der rohrförmigen Elemente (4a, 4b) in ihrem Inneren gesichert wird.

2. Befestigungsvorrichtung einer Transferstanzpresse nach Anspruch 1, wobei das Material des Körpers der mehreren Befestigungsstützen (3a, 3b, 3c) mindestens eines der Technopolymere umfasst, das mit Glasfaser verstärkt ist.

3. Befestigungsvorrichtung einer Transferstanzpresse nach einem der Ansprüche 1 bis 2, wobei der Körper der mehreren Befestigungsstützen (3a, 3b, 3c) mittels Spritzgießen eines Materials erhalten wird, das mindestens eines der Technopolymere als die grundlegende Komponente umfasst.

4. Befestigungsvorrichtung einer Transferstanzpresse nach Anspruch 1, wobei der Körper des ersten Satzes von Befestigungsstützen (3a) mindestens ein Paar von Öffnungen enthält, die zum Einpassen von Schraubelementen (15a) bereitgestellt sind, die entworfen sind, um das erste rohrförmige Stützelement (4a) zwischen beiden Körperabschnitten (12, 13) zu sichern.

5. Befestigungsvorrichtung einer Transferstanzpresse nach einem der Ansprüche 1 oder 4, wobei der Körper der Befestigungsstützen (3a) ein Paar von Öffnungen enthält, die zum Einpassen von Schraubelementen (15b) bereitgestellt sind, die entworfen sind, um die Befestigungsstützen (3a) entfernbar an die Nuten (7) in dem Halterprofil (2) der Presse zu koppeln.

6. Befestigungsvorrichtung einer Transferstanzpresse nach Anspruch 1, wobei jeder der halboffenen Ringe (16a, 16b) des Körpers mindestens ein Paar von Öffnungen enthält, die zum Einpassen von Schraubelementen (15a) bereitgestellt sind, die entworfen sind, das jeweilige erste und zweite rohrförmige Stützelement (4a, 4b) der Zange (1) in den Ringen (16a, 16b) zu sichern.

7. Befestigungsvorrichtung einer Transferstanzpresse nach Anspruch 6, wobei die Körperabschnitte in der Gestalt eines halboffenen Rings (16a, 16b) drehbar montiert sind, so dass sie um dieselbe konische Drehachse (19) gedreht werden können, die auf eine solche Weise angeordnet ist, dass sie durch die Öffnungen der Ringe (16a, 16b) geht, wobei die Enden der konischen Drehachse (19) konfiguriert sind, darauf die Schraubelemente (15a) einzustellen, um die Positionierung von einem der halboffenen Ringe (16a, 16b) auf der konischen Drehachse (19) zu sichern.

8. Befestigungsvorrichtung einer Transferstanzpresse nach einem der Ansprüche 1 bis 7, wobei mindestens einer der halboffenen Ringe (16a, 16b) ein Kugelgelenk (18) enthält, das in seinem Inneren untergebracht ist und konfiguriert ist, das zweite rohrförmige Element (4b) aufzunehmen.

9. Befestigungsvorrichtung einer Transferstanzpresse nach einem der Ansprüche 1 bis 6, wobei der Körper von einigen der Befestigungsstützen (3c) des zweiten Satzes von Stützen einen ersten halboffenen Ring (16a), der entworfen ist, das erste rohrförmige Stützelement (4a) aufzunehmen, und einen zweiten halboffenen Ring (16b), der entworfen ist, um das zweite äußerste rohrförmige Element (4b) aufzunehmen, definiert, wobei die beiden halboffenen Ringe (16a, 16b) so angeordnet sind, dass sie im Wesentlichen auf das erste rohrförmige Stützelement (4a) in einer Position der Verwendung der Vorrichtung ausgerichtet sind, wobei der Körper der Befestigungsstützen (3c) einen geraden Gelenkteil (22) der beiden halboffenen Ringe (16a, 16b) umfasst.

10. Befestigungsvorrichtung einer Transferstanzpresse nach einem der vorhergehenden Ansprüche, die mehrere Halterprofile (2) umfasst, wobei die mehreren Halterprofile (2) an die bewegliche Schiene des Stanzpressentransfers gekoppelt werden können und jedes Halterprofil (2) einen offenen Längskanal (6), der für den Durchlass der Druckluftkabel (10) und der elektrischen Kabel (11) ausgelegt ist, und mindestens ein Paar von Längsnuten (7), die zum entfernbaren Koppeln von mehreren Befestigungsstützen (3a, 3b, 3c) der rohrförmigen Elemente (4a, 4b) bereitgestellt sind, umfasst.

11. Befestigungsvorrichtung einer Transferstanzpresse nach Anspruch 10, die einen Deckel (20) umfasst, der entworfen ist, um mindestens einen Teil der äußeren Öffnung des Längskanals (6) des Halterprofils (2) abzudecken.

12. Transferstanzpresse, die mindestens eine Befestigungsvorrichtung nach einem der Ansprüche 1 bis 11, die an die bewegliche Schiene des Transfers der Presse gekoppelt ist, umfasst.

## Revendications

1. Dispositif de fixation pour presse d'estampage à transfert d'une pince pneumatique (1) destiné à être accouplé à un transfert de presse d'estampage par au moins un profilé support (2) comprenant une pluralité de supports de fixation (3a, 3b, 3c) d'éléments de support tubulaires (4a, 4b) de ladite pince (1), lesdits supports de fixation (3a, 3b, 3c) pouvant s'accoupler à l'un desdits profilés support (2), et chacun desdits supports de fixation (3a, 3b, 3c) comprenant un corps qui est adapté pour recevoir l'un au moins desdits éléments tubulaires (4a, 4b), et des moyens de fixation (15a, 15b) afin de fixer l'un au moins desdits éléments tubulaires (4a, 4b) sur le corps dudit support de fixation (3a, 3b, 3c), **caractérisé en ce que** :
- un premier ensemble desdits supports de fixation (3a) est configuré afin d'être accouplé de manière amovible au profilé support (2) de ladite presse à transfert, chacun desdits supports de fixation (3a) comprenant deux parties de corps (12, 13), dans lesquels le matériau du corps desdits supports de fixation (3a) comprend en tant que composant de base, un technopolymère sélectionné parmi un polyamide PA6, un polyamide PA66, un polyamide semi-aromatique, ou polyphthalamide (PPA), et un sulfure de polyphénylène (PPS), ou un mélange de ceux-ci, et dans lesquels les deux parties de corps (12, 13) définissent une surface de serrage mutuelle (14) configurée afin d'agir en tant que dispositif d'arrêt mécanique quand un premier élément tubulaire (4a) est fixé entre les deux parties (12, 13), et **en ce que** ;
- chaque support de fixation d'un second ensemble desdits supports de fixation (3b, 3c) comprend un corps qui est adapté afin d'agir en tant qu'élément de jonction entre ledit premier élément de support tubulaire (4a) et un second élément de support tubulaire le plus à l'extérieur (4b) associé à la même pince (1), la première partie dudit corps définissant un anneau semi-ouvert (16a) qui est conçu pour recevoir le premier élément de support tubulaire (4a), et la seconde partie dudit corps définissant un autre anneau semi-ouvert (16b) qui est conçu pour recevoir le second élément de support tubulaire le plus à l'extérieur (4b), dans lesquels le matériau du corps desdits supports de fixation (3b, 3c) comprend en tant que composant de base, un technopolymère sélectionné parmi un polyamide PA6, un polyamide PA66, un polyamide semi-aromatique, ou polyphthalamide (PPA), et un sulfure de polyphénylène (PPS), ou un mélange de ceux-ci, et dans lesquels chacun desdits anneaux semi-ouverts (16a, 16b) comprend des surfaces de serrage mutuelles (14) configurées pour agir en tant que dispositif d'arrêt mécanique quand un desdits éléments tubulaires (4a, 4b) est fixé à l'intérieur.

2. Dispositif de fixation pour presse d'estampage à transfert selon la revendication 1, dans lequel le matériau du corps de ladite pluralité de supports de fixation (3a, 3b, 3c) comprend l'un au moins de ces technopolymères renforcés avec de la fibre de verre.

3. Dispositif de fixation pour presse d'estampage à transfert selon l'une quelconque des revendications 1 ou 2, dans lequel le corps de ladite pluralité de supports de fixation (3a, 3b, 3c) est obtenu par moulage par injection d'un matériau qui comprend l'un au moins de ces technopolymères en tant que composant de base.

4. Dispositif de fixation pour presse d'estampage à transfert selon la revendication 1, dans lequel le corps de chacun dudit premier ensemble de supports de fixation (3a) comprend au moins une paire d'orifices prévus pour s'adapter à des éléments vis (15a) conçus pour fixer ledit premier élément de support tubulaire (4a) entre les deux parties de corps (12, 13).

5. Dispositif de fixation pour presse d'estampage à transfert selon l'une quelconque des revendications 1 ou 4, dans lequel le corps desdits supports de fixation (3a) comprend une paire d'orifices prévus pour s'adapter aux éléments vis (15b) conçus pour accoupler de manière amovible lesdits supports de fixation (3a) à des rainures (7) dans le profilé support (2) de la presse.

6. Dispositif de fixation pour presse d'estampage à transfert selon la revendication 1, dans lequel chacun desdits anneaux semi-ouverts (16a, 16b) dudit corps, comprend au moins une paire d'orifices prévus pour s'adapter à des éléments vis (15a) conçus pour fixer les premier et second éléments de support tubulaires respectifs (4a, 4b) de la pince (1) à l'intérieur desdits anneaux (16a, 16b).

7. Dispositif de fixation pour presse d'estampage à transfert selon la revendication 6, dans lequel lesdites parties de corps de la forme d'un anneau semi-ouvert (16a, 16b), sont montées de manière rotative de façon à pouvoir tourner autour d'un même axe de rotation conique (19), qui est placé de telle manière qu'il passe par les orifices desdits anneaux (16a, 16b), les extrémités dudit axe de rotation conique (19) étant configurées afin d'y ajuster les éléments vis (15a) afin de fixer le positionnement de l'un desdits anneaux semi-ouverts (16a, 16b) sur ledit axe de rotation conique (19).

8. Dispositif de fixation pour presse d'estampage à transfert selon l'une quelconque des revendications 1 à 7, dans lequel l'un au moins desdits anneaux semi-ouverts (16a, 16b) comprend un joint à rotule (18) qui est logé à l'intérieur de celui-ci et qui est configuré afin de recevoir ledit second élément tubulaire (4b).

9. Dispositif de fixation pour presse d'estampage à transfert selon l'une quelconque des revendications 1 à 6, dans lequel le corps de certains des supports fixation (3c) dudit second ensemble de supports définit un premier anneau semi-ouvert (16a) qui est conçu pour recevoir le premier élément de support tubulaire (4a), et un second anneau semi-ouvert (16b) qui est conçu pour recevoir le second élément tubulaire le plus à l'extérieur (4b), lesdits deux anneaux semi-ouverts (16a, 16b) étant agencés de telle sorte qu'ils puissent être sensiblement alignés avec le premier élément de support tubulaire (4a) dans une position d'utilisation du dispositif, le corps desdits supports de fixation (3c) comprenant une section de jonction droite (22) desdits deux anneaux semi-ouverts (16a, 16b).

10. Dispositif de fixation pour presse d'estampage à transfert selon l'une quelconque des revendications précédentes, comprenant une pluralité de profilés support (2), ladite pluralité de profilés support (2) pouvant s'accoupler à la barre mobile du transfert de presse d'estampage, et chaque profilé support (2) comprenant un canal ouvert longitudinal (6) qui est adapté pour le passage de câbles pneumatiques (10) et de câbles électriques (11), et au moins une paire de rainures longitudinales (7) prévues pour un accouplement amovible d'une pluralité desdits supports de fixation (3a, 3b, 3c) des éléments tubulaires (4a, 4b).

11. Dispositif de fixation pour presse d'estampage à transfert selon la revendication 10, comprenant un capot (20) qui est conçu pour couvrir au moins une section de l'ouverture extérieure dudit canal longitudinal (6) du profilé support (2).

12. Presse d'estampage à transfert comprenant au moins un dispositif de fixation selon l'une quelconque des revendications 1 à 11, à accoupler à la barre mobile du transfert de ladite presse.
